# FASCICULE DE BREVET EUROPEEN

(11) **EP 1 800 175 B1**
(45) Date de publication et mention de la délivrance du brevet: **16.03.2011**
(21) Numéro de dépôt: 05809427.7
(22) Date de dépôt: 12.10.2005
(51) Int. Cl.: G02B 26/08, G02B 26/06

(54) **MIROIR DEFORMABLE**
VERFORMBARER SPIEGEL
DEFORMABLE MIRROR

(30) Priorité: 12.10.2004 FR 0452342
(43) Date de publication de la demande: 27.06.2007
(73) Titulaire: CENTRE NATIONAL DE LA RECHERCHE SCIENTIFIQUE (CNRS), 75794 Paris Cedex 16 (FR); Université Joseph Fourier, 38041 Grenoble Cédex 9 (FR)
(72) Inventeur: CHARTON, Julien, F-38190 Brignoud (FR); HUBERT, Zoltan, F-78990 Elancourt (FR); JOCOU, Laurent, F-38140 Renage (FR); STADLER, Eric, F-38700 La Tronche (FR); BEUZIT, Jean-Luc, F-38420 Saint-Jean-le Vieux (FR); KERN, Pierre, F-38700 Corenc (FR)
(74) Mandataire: Novagraaf Technologies
(86) Numéro de dépôt international: PCT/FR2005/002528
(87) Numéro de publication internationale: WO 2006/040477

(56) Documents cités:
- US-A- 5 037 184
- O. CUGAT ET AL.: "Deformable magnetic mirror for adaptive optics: technological aspects" SENSORS AND ACTUATORS A, vol. 89, 20 mars 2001 (2001-03-20), pages 1-9, XP004317238
- ROGER HAMELINCK ET AL.: "Large adaptive deformable membrane mirror with high actuator density" PROCEEDINGS OF SPIE, vol. 5490, octobre 2004 (2004-10), pages 1482-1492, XP002330992
- PATENT ABSTRACTS OF JAPAN vol. 1997, no. 04, 30 avril 1997 (1997-04-30) & JP 08 334708 A (MITSUBISHI HEAVY IND LTD), 17 décembre 1996 (1996-12-17) cité dans la demande

## Description

La présente invention concerne un dispositif opto-électrique comprenant une membrane réfléchissante. Elle concerne plus particulièrement un miroir déformable miniature à grande dynamique, actionné magnétiquement, sans boucle d'asservissement local.

Le principe général de tels miroirs déformable est connu. On connaît par exemple le brevet japonais JP08334708 décrivant une solution comprenant une membrane déformable sur laquelle sont collés des aimants permanents. Cette membrane est maintenue dans un cadre présentant une nervure dans laquelle est introduite la membrane. Ce cadre supporte une platine sur laquelle sont placés des électro-aimants qui interagissent avec les aimants fixés sur la membrane.

Le problème qui se pose est que la membrane se déforme de façon difficilement modélisable ou prévisible. Elle présente des zones dont les caractéristiques mécaniques de rigidité, de masse, de fréquence propre sont très hétérogènes. Il est donc pratiquement indispensable d'associer un circuit électronique d'asservissement des électro-aimants, ainsi que des capteurs de position permettant de collecter l'information sur la déformation réelle par rapport à la déformation attendue, à un circuit électronique commandant en temps réel le signal électrique appliqué à chacun des électro-aimants, en fonction d'une valeur de consigne et des signaux fournis par les capteurs de position.

La nécessité d'un asservissement est surtout requise pour les miroirs magnétiques de grande taille. Ceci est dû à leur masse élevée, qui crée des fréquences de résonance très basses, obligeant à créer un asservissement local travaillant au-delà de la première résonance. Pour des miroirs de plus petite taille, en l'absence d'une couche continue et souple entre les aimants et la membrane, il est impossible de conserver une qualité optique convenable au miroir. Pour remédier à cet inconvénient, une solution consisterait à utiliser une membrane très épaisse, mais cela limiterait rapidement la course utile. L'absence d'asservissement local est une conséquence : si on peut conserver une membrane très mince, alors on peut utiliser des actionneurs très petits (et des aimants légers). Les fréquences de résonances sont alors repoussées au-delà de la bande passante nécessaire à la plupart des applications, ce qui permet de se dispenser d'asservissement local.

Des miroirs déformables sont divulgués dans US 5,037,184 et dans "déformable magnetic mirror for adaptative optics", O. Cugat et al. (2001).

Le but de l'invention est de remédier à ces inconvénients, en proposant un dispositif opto-électrique tel que defini dans la revendication 1. Il comprend une membrane déformable présentant une face extérieure réfléchissante et une face intérieure sur laquelle est fixée une pluralité d'aimants permanents, ledit dispositif comprenant en outre un boîtier comportant une pluralité d'électro-aimants placés en regard des aimants permanents pour exercer sur ces derniers une force électromagnétique provoquant un déplacement local de la zone correspondante de la membrane déformable caractérisé en ce que la face inférieure est recouverte d'une couche continue faite d'un matériaux souple. Cette couche continue souple absorbe et repartie les contraintes engendrées par un assemblage plus classique des aimants (par points de colle ou par tout autre moyen)

cette couche souple continue est collante. Elle permet ainsi le collage.

Avantageusement, la membrane est constituée par une zone amincie du cadre assurant la liaison mécanique avec le support des électroaimants.

On peut ajouter : Selon un mode de réalisation particulier, ce cadre est fixé au support par trois entretoises encollées à l'aide d'une colle silicone souple. Ces entretoises peuvent avantageusement être réalisées avec des billes malléables en alliage étain-plomb (couramment utilisées pour la connectique électronique), qui sont écrasées à la cote appropriée grâce à un Palmer ou tout autre dispositif calibré.

Selon un mode de réalisation particulier, la membrane est constituée en silicium avec une épaisseur comprise entre 5 et 50 micromètres.

Selon un mode de réalisation avantageux, les électroaimants sont constitués par un noyau présentant une zone cylindrique sur laquelle est placée une bobine, une partie au moins du noyau étant logé dans une plaque présentant des logements organisés selon une configuration identique à celle des aimants collés sur la membrane.

Selon un exemple particulier, les aimants et les électro-aimants forment une matrice NxN dont les angles sont inoccupés.

De préférence, la membrane présente une zone discale centrale active munie d'aimants et une zone annulaire périphérique dépourvue d'aimants.

Selon un mode de réalisation particulier, le diamètre de la zone active est compris entre 0,3 et 0,7 fois le diamètre extérieur de la membrane.

L'invention concerne aussi un procédé de fabrication d'un dispositif opto-électriquel tel que defini dans la revendication 9.

Avantageusement, l'étape de dépôt de colle est réalisée par centrifugation de la colle déposée localement sur la surface de la membrane.

Selon une mode de mise en oeuvre particulier, les aimants permanents sont disposés sur un support provisoire, la surface encollée étant ensuite déplacée sur la surface des aimants ainsi prédisposés.

Selon une variante, la membrane est formée par amincissement d'une zone discale d'un bloc homogène.

Selon une deuxième variante, l'étape de formation de la membrane est réalisée par gravure plasma.

Selon une troisième variante, l'étape de formation de la membrane est réalisée par photolithographie.

Selon une quatrième variante, l'étape de formation de la membrane est réalisée par gravure chimique.

L'invention sera mieux comprise à la lecture de la description qui suit, se référant au dessin annexé où :

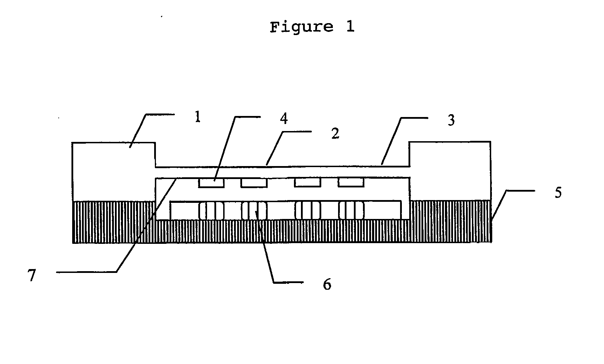

- la figure 1 représente une vue en coupe d'un actionneur selon l'invention.

La figure 1 représente un exemple non limitatif de réalisation, d'un miroir déformable selon l'invention.

Il comprend une pièce monolithique en Silicium, présentant une zone annulaire (1) formant un cadre, prolongé par une zone centrale de moindre épaisseur, constituant la membrane réfléchissante.

Cette membrane réfléchissante présente une zone active centrale (2) entourée par une couronne de suspension (3). La zone la zone active (2) comporte, sur la surface arrière, des aimants permanents (4). Les aimants sont de type Fer-Nickel-Chrome, d'une épaisseur de 250 micromètres, aimantés perpendiculairement à la surface de la membrane. Ils présentent un diamètre de 850 micromètres. Ces aimants (4), au nombre de 52, sont disposés en forme de réseau matricielle de 8x8 emplacements, les quatre coins étant dépourvus d'aimants.

Les aimants peuvent être tous aimantés dans le même sens, avec un pôle sud du même côté, ou au contraire aimantés en alternance.

A titre d'exemple, la membrane réfléchissante présente un diamètre de 30 millimètres, et la zone centrale un diamètre de 15 millimètres.

La pièce en silicium est fixée sur un support (5) comprenant une série d'électro-aimants (6) disposés en face de chacun des aimants permanents (4). Un circuit électronique commande chacun des électro-aimants (6).

Le mode de réalisation du miroir déformable magnétique est le suivant:
1/ Préparation des aimants :
   - on dispose une feuille de matériau non adhérant, par exemple du Kapton (nom commercial) d'une épaisseur de 100 micromètres sur un support en acier ;
   - on dispose les aimants sur cette feuille, puis on les aligne à l'aide d'un gabarit.
2/ Préparation de la membrane
   - gravure sélective d'un wafer de silicium de type SOI (épaisseur totale: 500 micromètres) ;
   - on obtient une membrane de silicium de 20 micromètres, encadrée sur un support en silicium de 500 micromètres ;
   - on fixe par collage ce cadre sur une plaque métallique qui servira d'interface mécanique ;
   - on dépose une couche uniforme (épaisseur 100 micromètres) de colle silicone fluide par centrifugation (tournette) ;
   - on attend quelques minutes afin que la colle ne sèche que partiellement.
3/ Assemblage
   - on présente la membrane encollée au-dessus des aimants grâce à un dispositif de translation ;
   - après contact, on poursuit la translation de 50 micromètres, afin d'enfoncer partiellement les aimants dans la colle encore très molle ;
   - après séchage complet (10 heures), on retire la membrane recouverte des aimants.

## Revendications

1. Dispositif opto-électrique constitué par une membrane déformable présentant une face extérieure réfléchissante et une face intérieure (7) pourvue d'une pluralité d'aimants permanents (4), ledit dispositif comprenant en outre un support (5) comportant une pluralité d'électro-aimants (6) placés en regard des aimants permanents (4) pour exercer sur ces derniers une force électromagnétique provoquant un déplacement local de la zone correspondante de la membrane déformable **caractérisé en ce que** la totalité de la face intérieure (7) est recouverte d'une couche continue de colle faite d'un matériau souple sur laquelle la pluralité d'aimants permanents (4) est fixées et tel que celle couche uniforme souple absorbe et répartit les contraintes, engendrées par le collage des aimants.

2. Dispositif selon la revendication 1, **caractérisé en ce que** la membrane est constituée par une zone amincie du cadre (1) assurant la liaison mécanique avec le support (5) des électroaimants.

3. Dispositif selon la revendication 1 ou la revendication 2, **caractérisé en ce que** la membrane est constituée en silicium.

4. Dispositif selon l'une quelconque des revendications précédentes, **caractérisé en ce que** la membrane présente une épaisseur comprise entre 5 et 50 micromètres.

5. Dispositif selon l'une quelconque des revendications précédentes, **caractérisé en ce que** les électroaimants (6) sont constitués par un noyau présentant une zone cylindrique sur laquelle est placée une bobine, une partie au moins du noyau étant logé dans une plaque présentant des logements organisés selon une configuration identique à celle des aimants (4) collés sur la membrane.

6. Dispositif selon l'une quelconque des revendications précédentes, **caractérisé en ce que** les aimants (4) et les électro-aimants (6) forment une matrice NxN dont les angles sont inoccupés.

7. Dispositif selon l'une quelconque des revendications précédentes, **caractérisé en ce que** la membrane présente une zone discale centrale active munie d'aimants (4) et une zone annulaire périphérique dépourvue d'aimants.

8. Dispositif selon la revendication précédente, **caractérisé en ce que** le diamètre de la zone active est compris entre 0,3 et 0,7 fois le diamètre extérieur de la membrane.

9. Procédé de fabrication d'un dispositif opto-électrique selon la revendication 1 **caractérisé en ce qu'**il comporte une étape de dépôt sur la surface intérieure de la membrane d'une pellicule de colle, et de dépôt des aimants permanents sur une partie de la surface encollée.

10. Procédé selon la revendication 10, **caractérisé en ce que** l'étape de dépôt de colle est réalisée par centrifugation de la colle déposée localement sur la surface de la membrane.

11. Procédé selon la revendication 10 ou 11, **caractérisé en ce que** les aimants permanents sont disposés sur un support provisoire, la surface encollée étant ensuite déplacée sur la surface des aimants ainsi prédisposés.

12. Procédé selon l'une quelconque des revendications 10 à 12, **caractérisé en ce que** la membrane est formée par amincissement d'une zone discale d'un bloc homogène.

13. Procédé selon la revendication précédente, **caractérisé en ce que** l'étape de formation de la membrane est réalisée par gravure plasma.

14. Procédé selon la revendication 13, **caractérisé en ce que** l'étape de formation de la membrane est réalisée par photolithographie.

15. Procédé selon la revendication 13, **caractérisé en ce que** l'étape de formation de la membrane est réalisée par gravure chimique.

## Claims

1. An opto-electric device composed of a deformable membrane having a reflecting outer face and an inner face (7) provided with a plurality of permanent magnets (4), said device further including a support (5) comprising a plurality of electromagnets (6) positioned opposite the permanent magnets (4) in order to exert thereon an electromagnetic force causing a local displacement of the matching area on the deformable membrane **characterized in that** the whole inner face (7) is covered with a continuous layer of glue made of a flexible material, whereon the plurality of permanent magnets (4) is fixed, and so that said flexible uniform layer absorbs and distributes the constraints caused by the gluing of the magnets.

2. A device according to claim 1, **characterized in that** the membrane is composed of a thinned area of the frame (1) providing the mechanical connection with the electromagnets support (5).

3. A device according to claim 1 or claim 2, **characterized in that** the membrane is made of silicon.

4. A device according to any one of the preceding claims, **characterized in that** the membrane has a thickness between 5 and 50 micrometers.

5. A device according to any one of the preceding claims, **characterized in that** the electromagnets (6) are composed of a core having a cylindrical area whereon a coil is positioned, with at least one part of the core being accommodated in a plate having recesses with a configuration identical to that of the magnets (4) stuck on the membrane.

6. A device according to any one of the preceding claims, **characterized in that** the magnets (4) and the electromagnets (6) form a NxN matrix, the angles of which are idle.

7. A device according to any one of the preceding claims, **characterized in that** the membrane has an active central disk-shaped zone provided with magnets (4) and a peripheral annular zone without magnets.

8. A device according to the preceding claim, **characterized in that** the diameter of the active area is between 0.3 and 0.7 times the outer diameter of the membrane.

9. A method for manufacturing an opto-electric device according to claim 1, **characterized in that** it includes a step of pasting a film of glue onto the inner surface of the membrane, and of positioning permanent magnets on a part of the pasted surface.

10. A method according to claim 10, **characterized in that** the step of pasting glue is executed by centrifuging the glue locally positioned on the surface of the membrane.

11. A method according to claim 10 or 11, **characterized in that** the permanent magnets are positioned on a temporary support, with the pasted surface being subsequently moved on the surface of the thus pre-positioned magnets.

12. A method according to any one of claims 10 to 12, **characterized in that** the membrane is formed by thinning a disk-shaped zone of an homogeneous block.

13. A method according to the preceding claim, **characterized in that** the step of forming the membrane is executed by plasma etching.

14. A method according to claim 13, **characterized in that** the step of forming the membrane is executed by photolithography.

15. A method according to claim 13, **characterized in that** the step of forming the membrane is executed by chemical etching.

## Patentansprüche

1. Optisch-elektrische Vorrichtung, bestehend aus einer verformbaren Membran, die eine reflektierende Außenseite und eine Innenseite (7) aufweist, die mit einer Mehrzahl von Permanentmagneten (4) versehen ist, wobei die besagte Vorrichtung außerdem einen Träger (5) umfasst, der eine Mehrzahl Elektromagneten (6) enthält, die gegenüber den Permanentmagneten (4) platziert sind, um auf letztere eine elektromagnetische Kraft auszuüben, die eine örtliche Verschiebung der entsprechenden Zone der verformbaren Membran auslöst, **dadurch gekennzeichnet, dass** die gesamte Innenseite (7) mit einer durchgehenden Schicht aus Kleber aus einem weichen Material überdeckt ist, auf dem die Mehrzahl Permanentmagneten (4) befestigt ist, und so, dass diese gleichförmige weiche Schicht die durch das Kleben der Magneten eingeleiteten Belastungen absorbiert und verteilt.

2. Vorrichtung nach Anspruch 1, **dadurch gekennzeichnet, dass** die Membran von einer verschmälerten Zone des Rahmens (1) gebildet wird und die mechanische Verbindung mit dem Träger (5) der Elektromagneten sicherstellt.

3. Vorrichtung nach Anspruch 1 oder Anspruch 2, **dadurch gekennzeichnet, dass** die Membran aus Silizium besteht.

4. Vorrichtung nach einem beliebigen der vorstehenden Ansprüche, **dadurch gekennzeichnet, dass** die Membran eine Dicke zwischen 5 und 50 Mikrometer aufweist.

5. Vorrichtung nach einem beliebigen der vorstehenden Ansprüche, **dadurch gekennzeichnet, dass** die Elektromagneten (6) aus einem Kern bestehen, der eine zylinderförmige Zone aufweist, auf der eine Spule platziert ist, wobei zumindest ein Teil des Kerns in einer Platte mit Aufnahmen untergebracht ist, die in einer Konfiguration angeordnet sind, die identisch mit derjenigen der auf die Membran geklebten Magneten (4) ist

6. Vorrichtung nach einem beliebigen der vorstehenden Ansprüche, **dadurch gekennzeichnet, dass** die Magneten (4) und die Elektromagneten (6) eine Matrix NxN bilden, deren Ecken unbelegt sind.

7. Vorrichtung nach einem beliebigen der vorstehenden Ansprüche, **dadurch gekennzeichnet, dass** die Membran eine aktive zentrale diskale mit Magneten (4) versehene Zone und eine ringförmige periphere Zone ohne Magneten aufweist.

8. Vorrichtung nach vorstehendem Anspruch, **dadurch gekennzeichnet, dass** der Durchmesser der aktiven Zone bei zwischen dem 0,3 und dem 0,7-fachen des Außendurchmessers der Membran liegt.

9. Herstellungsverfahren einer optisch-elektrischen Vorrichtung nach Anspruch 1, **dadurch gekennzeichnet, dass** es einen Schritt mit Aufbringen einer Kleberschicht auf der Innenseite der Membran und mit Aufsetzen der Permanentmagneten auf einen Teil der eingeleimten Fläche umfasst.

10. Verfahren nach Anspruch 10, **dadurch gekennzeichnet, dass** der Schritt mit dem Aufbringen des Klebers durch Zentrifugieren des örtlich auf die Fläche der Membran aufgebrachten Klebers ausgeführt wird.

11. Verfahren nach Anspruch 10 oder 11, **dadurch gekennzeichnet, dass** die Permanentmagneten auf einem provisorischen Träger angeordnet werden, wobei die eingeleimte Fläche dann auf die Fläche der somit vorher angeordneten Magneten verschoben wird.

12. Vorrichtung nach einem beliebigen der vorstehenden Ansprüche 10 bis 12, **dadurch gekennzeichnet, dass** die Membran durch Schmälerung einer diskalen Zone eines homogenen Blocks gebildet wird.

13. Vorrichtung nach vorstehendem Anspruch, **dadurch gekennzeichnet, dass** der Schritt mit der Bildung der Membran durch Plasmagravur ausgeführt wird.

14. Verfahren nach Anspruch 13, **dadurch gekennzeichnet, dass** der Schritt mit der Bildung der Membran durch Photolithographie ausgeführt wird.

15. Verfahren nach Anspruch 13, **dadurch gekennzeichnet, dass** der Schritt mit der Bildung der Membran durch chemische Ätzung ausgeführt wird.
